# EUROPÄISCHE PATENTSCHRIFT

(11) **EP 2 867 036 B1**
(45) Veröffentlichungstag und Bekanntmachung des Hinweises auf die Patenterteilung: **22.06.2016**
(21) Anmeldenummer: 13770859.0
(22) Anmeldetag: 19.09.2013
(51) Int. Cl.: B60C 11/24

(54) **VERFAHREN, STEUERGERÄT UND SYSTEM ZUM ERMITTELN EINER PROFILTIEFE EINES PROFILS EINES REIFENS**
METHOD, CONTROL DEVICE AND SYSTEM FOR DETERMINING A PROFILE DEPTH OF A PROFILE OF A TYRE
PROCÉDÉ, APPAREIL DE COMMANDE ET SYSTÈME PERMETTANT DE DÉTERMINER UNE PROFONDEUR D'UNE SCULPTURE D'UN PNEUMATIQUE

(30) Priorität: 01.10.2012 DE 102012217901
(43) Veröffentlichungstag der Anmeldung: 06.05.2015
(73) Patentinhaber: Continental Automotive GmbH, 30165 Hannover (DE)
(72) Erfinder: KRETSCHMANN, Matthias, 93059 Regensburg (DE)
(86) Internationale Anmeldenummer: PCT/EP2013/069434
(87) Internationale Veröffentlichungsnummer: WO 2014/053322

(56) Entgegenhaltungen:
- JP-A- 2008 247 126
- US-A1- 2010 060 443

## Beschreibung

Die Erfindung betrifft ein Verfahren zum Ermitteln einer Profiltiefe eines Profils eines Reifens während eines Betriebs eines den Reifen aufweisenden Fahrzeugs sowie ein Steuergerät und ein System für ein Fahrzeug zum Ermitteln einer Profiltiefe eines Profils eines Reifens des Fahrzeugs.

Aus der WO 02/12003 A2 ist eine Vorrichtung zum Überwachen des Zustands jedes einer Mehrzahl von Rädern eines Fahrzeugs bekannt. Die Vorrichtung weist einen Computer, ein Raddrehgeschwindigkeits-Ermittlungssystem, das Raddrehgeschwindigkeiten bezüglich jedes Rades erzeugt und mit dem Computer gekoppelt ist, um Drehgeschwindigkeitssignale für jedes Rad an den Computer zu übermitteln, und einen Fahrzeuggeschwindigkeits-Signalgenerator auf. Zudem weist die Vorrichtung einen Computerspeicher auf, in welchem Daten gespeichert sind, die sich auf Reifen-Abnutzungsraten für auf jedem der Räder montiertem Reifen, zurückgelegte Reifenwegstrecke seit Installation, Wegstrecke der momentanen Fahrt, durchschnittliche Raddrehgeschwindigkeiten und einen Skalierungsfaktor zum Schätzen der Radgeschwindigkeit basierend auf dem FahrzeugGeschwindigkeitssignal beziehen. Ferner weist die Vorrichtung ein gespeichertes Programm zur Ausführung auf dem Computer auf zum Referenzieren der gespeicherten Daten bei einem Ermitteln von Radgeschwindigkeiten außerhalb einer Toleranzgrenze, die kompromittierte Betriebsbedingungen kennzeichnen.

Aus der JP 2008 247126 A ist ein Verfahren zum Ermitteln einer Profiltiefe eines Profils eines Reifens gemäß dem Oberbegriff des Anspruchs 1 bekannt.

Aus der US 2010/060443 A1 ist eine Vorrichtung zum Abschätzen von Reifenverschleiß bekannt, die Folgendes umfasst: eine Fahrzeuglängsbeschleunigung-Messeinheit, die an einer Fahrzeugaufbauseite eines Fahrzeugs installiert ist und die Längsbeschleunigung des gefahrenen Fahrzeugs misst, eine Raddrehgeschwindigkeit-Messeinheit zum Messen der Drehgeschwindigkeit eines Rades des Fahrzeugs, einen Drucksensor, der dafür konfiguriert ist, einen Druck in einem Inneren des Reifens des Fahrzeugs zu erfassen, eine Raddrehgeschwindigkeit-Berichtigungseinheit, die dafür konfiguriert ist, die gemessene Drehgeschwindigkeit des Rades entsprechend dem erfassten Druck in dem Inneren des Reifens zu berichtigen, eine Berechnungseinheit, die dafür konfiguriert ist, ein Veränderungsausmaß der gemessenen Drehgeschwindigkeit des Rades durch die Verwendung der berichtigten Drehgeschwindigkeit des Rades zu berechnen, eine Beschleunigungsverhältnis-Berechnungseinheit, die dafür konfiguriert ist, ein Beschleunigungsverhältnis S = (aw/ax) zu berechnen, das ein Verhältnis zwischen der durch die Fahrzeuglängsbeschleunigung-Messeinheit gemessenen Fahrzeuglängsbeschleunigung ax und dem durch die Berechnungseinheit berechneten Veränderungsausmaß aw der Drehgeschwindigkeit ist, und eine Verschleißausmaß-Abschätzungseinheit, die dafür konfiguriert ist, ein Verschleißausmaß des an dem Fahrzeug montierten Reifens aus dem berechneten Beschleunigungsverhältnis S = (aw/ax) abzuschätzen.

Aufgabe der Erfindung ist es, ein Verfahren, ein Steuergerät und ein System zum Ermitteln einer Profiltiefe eines Profils eines Reifens anzugeben, welche eine verbesserte Ermittlung der Profiltiefe während eines Betriebs eines den Reifen aufweisenden Fahrzeugs ermöglichen.

Diese Aufgabe wird mit den Gegenständen der unabhängigen Ansprüche gelöst. Vorteilhafte Weiterbildungen ergeben sich aus den abhängigen Ansprüchen.

Ein Verfahren zum Ermitteln einer Profiltiefe eines Profils eines Reifens während eines Betriebs eines den Reifen aufweisenden Fahrzeugs weist gemäß einem Aspekt der Erfindung folgende Schritte auf. Es erfolgt ein Ermitteln einer momentanen Drehgeschwindigkeit eines den Reifen aufweisenden Rades des Fahrzeugs basierend auf von zumindest einem ersten Sensor ermittelten Daten. Zudem erfolgt ein Ermitteln einer momentanen Geschwindigkeit des Fahrzeugs basierend auf von zumindest einem, von dem zumindest einen ersten Sensor verschiedenen zweiten Sensor ermittelten Daten. Darüber hinaus erfolgt ein Ermitteln eines momentanen dynamischen Radius des den Reifen aufweisenden Rades basierend auf der ermittelten momentanen Drehgeschwindigkeit und der ermittelten momentanen Geschwindigkeit. Ferner erfolgt ein Ermitteln zumindest eines ersten Parameters des Reifens, ausgewählt aus der Gruppe, bestehend aus einer momentanen Reifentemperatur, einem momentanen Reifendruck und einer momentanen Reifenlast. Weiterhin erfolgt ein Ermitteln eines momentanen dynamischen Innenradius des Rades basierend auf dem zumindest einen ermittelten ersten Parameter. Der Innenradius des Rades ist dabei der Abstand zwischen der Radmitte und dem reifenseitigen Ansatz des Profils. Zudem erfolgt ein Ermitteln einer Profiltiefe des Profils des Reifens basierend auf dem ermittelten momentanen dynamischen Radius und dem ermittelten momentanen dynamischen Innenradius.

Dabei wird hier und im Folgenden unter dem momentanen dynamischen Radius derjenige Radius verstanden, den ein starres Rad aufweist, um bei einer bestimmten Geschwindigkeit denselben Abrollumfang zu besitzen, den das den Reifen aufweisende Rad bei dieser Geschwindigkeit besitzt. Der Abrollumfang ist dabei die Strecke, die ein Rad bei einer Umdrehung schlupffrei zurücklegt. Der dynamische Radius wird ferner auch als dynamischer Radradius oder dynamischer Rollradius bezeichnet. Der momentane dynamische Innenradius ist der Abstand zwischen der Radmitte und dem reifenseitigen Ansatz des Profils des genannten starren Rads, das heißt eines Rads, das bei einer bestimmten Geschwindigkeit denselben Abrollumfang besitzt, den das den Reifen aufweisende Rad bei dieser Geschwindigkeit besitzt.

Das Verfahren gemäß der genannten Ausführungsform ermöglicht eine verbesserte Ermittlung der Profiltiefe des Reifens während eines Betriebs des Fahrzeugs. Dies erfolgt insbesondere durch das Ermitteln des momentanen dynamischen Radius, das Ermitteln des momentanen dynamischen Innenradius des Rades basierend auf dem zumindest einen ermittelten ersten Parameter und das Ermitteln der Profiltiefe basierend auf den genannten Größen. Dabei wird, wie im Folgenden näher erläutert ist, von der Überlegung ausgegangen, dass sich der dynamische Radius des Rades aus dem momentanen dynamischen Innenradius des Rades und der Profiltiefe des Profils des Reifens zusammensetzt und der momentane dynamische Innenradius des Rades von dem zumindest einen ersten Parameter abhängt. Somit kann durch das Ermitteln des zumindest einen ersten Parameters der jeweilige momentane dynamische Innenradius des Rades bestimmt und damit die Profiltiefe in möglichst genauem Maße ermittelt werden.

Der zumindest eine erste Sensor ist typischerweise als Drehzahlsensor ausgebildet, das heißt, das Ermitteln der momentanen Drehgeschwindigkeit des Rades erfolgt in dieser Ausgestaltung basierend auf von zumindest einem Drehzahlsensor ermittelter Daten. Dadurch kann die Drehgeschwindigkeit des Rades in einfacher und zuverlässiger Weise ermittelt werden.

Das Ermitteln der momentanen Drehgeschwindigkeit des Rades beinhaltet dabei typischerweise ein Ermitteln einer momentanen Winkelgeschwindigkeit des Rades.

Der zumindest eine zweite Sensor ist bevorzugt ausgewählt aus der Gruppe bestehend aus einem satellitengestützten Positionsermittlungssensor, einem Radarsensor, einem Lidarsensor, einem Ultraschallsensor und einer optischen Kamera. Mittels der genannten Sensoren kann die momentane Geschwindigkeit des Fahrzeugs unabhängig von einer drehzahlbasierten Geschwindigkeitsermittlung erfolgen und somit eine unabhängige Fahrzeug-Referenzgeschwindigkeit für die Ermittlung des momentanen dynamischen Radius und damit die Ermittlung der Profiltiefe bereitgestellt werden.

In einer weiteren Ausführungsform des Verfahrens erfolgt das Ermitteln des momentanen dynamischen Innenradius des Rades zudem basierend auf der ermittelten momentanen Geschwindigkeit des Fahrzeugs. Dabei wird von der Überlegung ausgegangen, dass der momentane dynamische Innenradius des Rades neben den bereits genannten Größen zudem von der momentanen Geschwindigkeit abhängt, wie im Folgenden weiter erläutert wird. Der jeweilige momentane dynamische Innenradius des Rades kann somit mittels der genannten Ausführungsform in weiter verbessertem Maße bestimmt werden.

Zudem kann das Ermitteln des momentanen dynamischen Innenradius des Rades basierend auf einer Reifenart und/oder einem Alter des Reifens erfolgen. Die genannten Parameter können ebenfalls einen Einfluss auf den Innenradius des Rades besitzen und werden daher bevorzugt ebenfalls bei der Bestimmung des Innenradius berücksichtigt.

Das Ermitteln des momentanen dynamischen Innenradius des Rades erfolgt beispielsweise mittels zumindest einer, in einer Speichervorrichtung abgelegten Kennlinie. Die zumindest eine Kennlinie gibt dabei den Zusammenhang zwischen dem zumindest einen ersten Parameter des Reifens und dem Innenradius des Rades, der Geschwindigkeit des Fahrzeugs und dem Innenradius des Rades, der Reifenart und dem Innenradius des Rades und/oder dem Alter des Reifens und dem Innenradius des Rades an.

Die zumindest eine Kennlinie kann auf einem Modell des Rades basieren, das heißt der Zusammenhang zwischen den genannten Größen und dem Innenradius des Rades ist in dieser Ausgestaltung bereits in der Speichervorrichtung vorabgelegt. Weiterhin kann die zumindest eine Kennlinie während eines Fahrbetriebs des Fahrzeugs ermittelt werden. In der letztgenannten Ausgestaltung wird somit die jeweilige Kennlinie zunächst in einer Lernphase ermittelt, typischerweise nachdem ein neues Rad an dem Fahrzeug befestigt wurde, und im Weiteren für das Ermitteln des momentanen dynamischen Innenradius verwendet.

In einer weiteren Ausführungsform des Verfahrens wird zudem zumindest ein zweiter Parameter ermittelt, ausgewählt aus der Gruppe, bestehend aus einer momentanen Beschleunigung des Fahrzeugs, einer momentanen Gierrate des Fahrzeugs, einem momentanen Lenkwinkel, einem momentanen Drehmoment eines Antriebsmotors des Fahrzeugs und einem Betriebszustand einer Bremsvorrichtung des Fahrzeugs. Das Ermitteln der Profiltiefe des Profils des Reifens erfolgt in dieser Ausführungsform zudem in Abhängigkeit des zumindest einen ermittelten zweiten Parameters. Dabei wird von der Überlegung ausgegangen, dass die Profiltiefe in möglichst genauem Maße während Fahrsituationen ermittelt werden kann, in welchen ein Einfluss von Antriebs- bzw. Bremsschlupf gering ist und sich das Fahrzeug geradlinig bewegt. Mittels der genannten Parameter können derartige Fahrsituationen in einfacher Weise identifiziert werden und dabei zudem der Einfluss von Antriebs- bzw. Bremsschlupf und Fahrbahnkrümmung kompensiert werden.

Zudem kann ein Ausgeben einer Warnmeldung erfolgen, falls die ermittelte Profiltiefe des Profils des Reifens einen ersten vorbestimmten Schwellenwert unterschreitet. Das Ausgeben der Warnmeldung kann dabei innerhalb des Fahrzeugs erfolgen. Dadurch können die Insassen des Fahrzeugs, insbesondere der Fahrer des Fahrzeugs, auf eine geringe Profiltiefe hingewiesen werden. Ferner kann die Warnmeldung mittels einer Fahrzeug-zu-Fahrzeug-Kommunikationsvorrichtung an weitere Fahrzeuge übermittelt werden.

In einer Ausgestaltung des Verfahrens erfolgt zudem eine automatische Benachrichtigung einer Serviceeinrichtung, falls die ermittelte Profiltiefe des Profils des Reifens einen zweiten vorbestimmten Schwellenwert unterschreitet. Der zweite vorbestimmte Schwellenwert kann dabei dem ersten vorbestimmten Schwellenwert entsprechen oder von diesem verschieden sein. Dadurch kann beispielsweise eine Terminvereinbarung für einen Austausch des Reifens automatisch initiiert werden.

In einer weiteren Ausführungsform des Verfahrens wird die ermittelte Profiltiefe des Profils des Reifens an zumindest ein Fahrerassistenzsystem des Fahrzeugs übermittelt. Die ermittelte Profiltiefe wird somit in der genannten Ausführungsform zumindest einem Fahrerassistenzsystem zur Verfügung gestellt. Dadurch kann der Betrieb des Fahrerassistenzsystems an die jeweilige ermittelte Profiltiefe angepasst werden. Das zumindest eine Fahrerassistenzsystem ist dabei beispielsweise ausgewählt aus der Gruppe, bestehend aus einem Antiblockiersystem, einem Fahrdynamikregelsystem, insbesondere einem elektronischen Stabilitätsprogramm, und einem Notbremssystem.

Die Erfindung betrifft zudem ein Steuergerät für ein Fahrzeug zum Ermitteln einer Profiltiefe eines Profils eines Reifens des Fahrzeugs. Das Steuergerät weist zumindest eine Empfangsvorrichtung auf, die zum Empfangen einer momentanen Drehgeschwindigkeit eines den Reifen aufweisenden Rades des Fahrzeugs, einer momentanen Geschwindigkeit des Fahrzeugs und zumindest eines ersten Parameters des Reifens, ausgewählt aus der Gruppe, bestehend aus einer momentanen Reifentemperatur, einem momentanen Reifendruck und einer momentanen Reifenlast, ausgebildet ist. Zudem weist das Steuergerät eine erste Ermittlungsvorrichtung auf, die zum Ermitteln eines momentanen dynamischen Radius des den Reifen aufweisenden Rades basierend auf der empfangenen momentanen Drehgeschwindigkeit und der empfangenen momentanen Geschwindigkeit ausgebildet ist. Ferner weist das Steuergerät eine zweite Ermittlungsvorrichtung auf, die zum Ermitteln eines momentanen dynamischen Innenradius des Rades basierend auf dem zumindest einen empfangenen ersten Parameter ausgebildet ist. Der Innenradius des Rades ist dabei der Abstand zwischen der Radmitte und dem reifenseitigen Ansatz des Profils. Darüber hinaus weist das Steuergerät eine dritte Ermittlungsvorrichtung auf, die zum Ermitteln einer Profiltiefe des Profils des Reifens basierend auf dem ermittelten momentanen dynamischen Radius und dem ermittelten momentanen dynamischen Innenradius ausgebildet ist.

Das Steuergerät kann als eigenständiges Steuergerät für das Fahrzeug ausgebildet oder Bestandteil eines weiteren Steuergeräts sein, beispielsweise eines Steuergeräts eines Antiblockiersystems oder eines Fahrdynamikregelsystems.

Weiterhin betrifft die Erfindung ein System für ein Fahrzeug zum Ermitteln einer Profiltiefe eines Profils eines Reifens des Fahrzeugs. Das System weist ein Steuergerät gemäß der genannten Ausführungsform und zumindest eine Radeinheit auf. Die zumindest eine Radeinheit ist dabei in dem Reifen anordenbar und weist zumindest einen Sensor auf, ausgewählt aus der Gruppe, bestehend aus einem Temperatursensor, einem Drucksensor und einem Reifenlastsensor.

Das Steuergerät und das System zum Ermitteln der Profiltiefe weisen die bereits im Zusammenhang mit dem entsprechenden Verfahren genannten Vorteile auf, welche an dieser Stelle zur Vermeidung von Wiederholungen nicht nochmals aufgeführt werden, und eignen sich insbesondere für die Durchführung des erfindungsgemäßen Verfahrens, wobei dies auch auf die Ausgestaltungen und Weiterbildungen zutreffen kann. Hierzu können das Steuergerät und das System weitere geeignete Vorrichtungen bzw. Komponenten aufweisen.

Ausführungsformen der Erfindung werden nun anhand der beigefügten Figuren näher erläutert.
- Figur 1: zeigt ein Flussdiagramm eines Verfahrens zum Ermitteln einer Profiltiefe eines Profils eines Reifens gemäß einer ersten Ausführungsform;
- Figur 2: zeigt ein Flussdiagramm eines Verfahrens zum Ermitteln einer Profiltiefe eines Profils eines Reifens gemäß einer zweiten Ausführungsform;
- Figur 3A: zeigt ein Fahrzeug mit einem Steuergerät zum Ermitteln einer Profiltiefe eines Profils eines Reifens gemäß einer Ausführungsform;
- Figur 3B: zeigt einen schematischen Querschnitt eines der Räder des in Figur 3A gezeigten Fahrzeugs;
- Figur 4: zeigt ein System zum Ermitteln einer Profiltiefe eines Profils eines Reifens gemäß einer Ausführungsform.

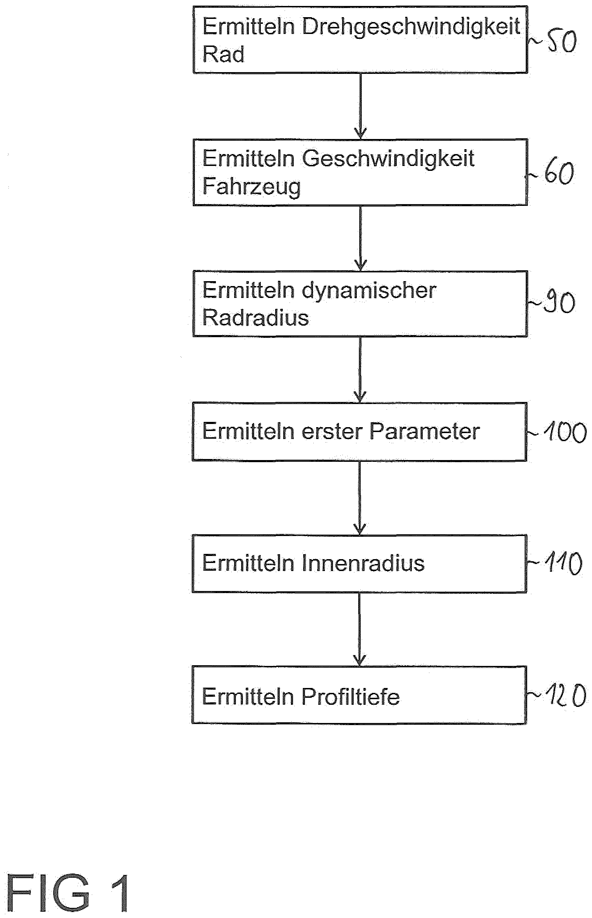

Figur 1 zeigt ein Flussdiagramm eines Verfahrens zum Ermitteln einer Profiltiefe eines Profils eines Reifens während eines Betriebs eines den Reifen aufweisenden Fahrzeugs gemäß einer ersten Ausführungsform. Das Fahrzeug ist typischerweise ein Kraftfahrzeug, beispielsweise ein Personenkraftwagen oder ein Lastkraftwagen.

In einem Schritt 50 erfolgt ein Ermitteln einer momentanen Drehgeschwindigkeit eines den Reifen aufweisenden Rades des Fahrzeugs basierend auf von zumindest einem ersten Sensor ermittelten Daten. Beispielsweise erfolgt ein Ermitteln einer momentanen Winkelgeschwindigkeit ωdes Rades. Der zumindest eine erste Sensor ist dazu bevorzugt als Drehzahlsensor ausgebildet.

In einem Schritt 60 erfolgt ein Ermitteln einer momentanen Geschwindigkeit v_{ref} des Fahrzeugs, das heißt der Längsgeschwindigkeit des Fahrzeugs, basierend auf von zumindest einem, von dem zumindest einen ersten Sensor verschiedenen zweiten Sensor ermittelten Daten. Das Ermitteln der momentanen Geschwindigkeit v_{ref} beinhaltet typischerweise ein Ermitteln eines Wertes einer in einem bestimmten Zeitintervall zurückgelegten Fahrtstrecke des Fahrzeugs basierend auf den von dem zumindest einen zweiten Sensor ermittelten Daten. Der zumindest eine zweite Sensor ist dazu beispielsweise als satellitengestützter Positionsermittlungssensor ausgebildet. Weiterhin kann der zumindest eine zweite Sensor als Radarsensor, Lidarsensor, Ultraschallsensor oder optische Kamera ausgebildet sein und damit ein Abstand des Fahrzeugs zu als ortsfest erkannten Objekten zu verschiedenen Zeitpunkten bestimmt und daraus die zurückgelegte Fahrtstrecke des Fahrzeugs ermittelt werden.

Weiterhin wird in einem Schritt 90 ein momentaner dynamischer Radius R des den Reifen aufweisenden Rades basierend auf der ermittelten momentanen Drehgeschwindigkeit und der ermittelten momentanen Geschwindigkeit ermittelt. Dies erfolgt in der gezeigten Ausführungsform mittels der Beziehung v_{ref} = R • ω, wobei v_{ref} wie bereits erläutert die momentane Geschwindigkeit des Fahrzeugs, R der momentane dynamische Radius des Rades und ω die momentane Drehgeschwindigkeit des Rades ist.

In einem Schritt 100 wird zumindest ein erster Parameter des Reifens ermittelt, wobei der zumindest eine erste Parameter ausgewählt ist aus der Gruppe, bestehend aus einer momentanen Reifentemperatur T, einem momentanen Reifendruck P und einer momentanen Reifenlast. Bevorzugt werden dabei sämtliche der genannten Parameter ermittelt. Die genannten Parameter werden typischerweise mittels einer in dem Reifen angeordneten Radeinheit ermittelt, wie im Zusammenhang mit den weiteren Figuren näher erläutert wird.

Weiterhin wird in einem Schritt 110 ein momentaner dynamischer Innenradius r⁰ des Rades basierend auf dem zumindest einen ermittelten ersten Parameter sowie der ermittelten momentanen Geschwindigkeit v_{ref} und einer Art des Reifens ermittelt, wobei die Art des Reifens beispielsweise in einer Speichervorrichtung der Radeinheit hinterlegt ist. Der Innenradius r⁰ des Rades ist dabei der Abstand zwischen der Radmitte und dem reifenseitigen Ansatz des Profils. Das Ermitteln des momentanen dynamischen Innenradius r⁰ des Rades erfolgt bevorzugt mittels zumindest einer, in einer Speichervorrichtung abgelegten Kennlinie.

Typischerweise nimmt der momentane dynamische Innenradius r⁰ des Rades dabei mit steigender Reifentemperatur und mit steigendem Reifendruck zu. Eine steigende Reifenlast führt hingegen typischerweise zu einer Verringerung des momentanen dynamischen Innenradius r⁰. Mit steigender momentanen Geschwindigkeit des Fahrzeugs nimmt der momentane dynamische Innenradius r⁰ typischerweise zu, wobei die Zunahme des Innenradius r⁰ typischerweise bei Erreichen eines bestimmten Geschwindigkeitsbereiches in eine Sättigung übergeht.

Die genannten Abhängigkeiten können durch das Ermitteln des zumindest einen ersten Parameters sowie der momentanen Geschwindigkeit v_{ref} und der Art des Reifens bei der Ermittlung des momentanen dynamischen Innenradius r⁰ des Rades berücksichtigt und damit kompensiert werden.

Ferner erfolgt in einem Schritt 120 ein Ermitteln einer Profiltiefe t_{P} des Profils des Reifens basierend auf dem ermittelten momentanen dynamischen Radius R und dem ermittelten momentanen dynamischen Innenradius r⁰. Dies erfolgt in der gezeigten Ausführungsform auf der Grundlage der Beziehungen v_{ref} = [r⁰ (v_{ref}, T, P, Reifenlast, Reifenart) + t_{P}] • ω sowie v_{ref} = R • ω. Aus diesen ergibt sich die Beziehung R = r⁰ (v_{ref}, T, P, Reifenlast, Reifenart) + t_{P} mittels derer die Profiltiefe t_{P} bestimmt werden kann.

t_{P} ist dabei in der gezeigten Ausführungsform ein Maß für das dynamische Verhalten der Profiltiefe des Profils des bereits erläuterten starren Rades, das bei einer bestimmten Geschwindigkeit den selben Abrollumfang besitzt, den das den Reifen aufweisende Rad bei dieser Geschwindigkeit besitzt. Der ermittelte Wert kennzeichnet somit das Verhalten der Profiltiefe im Fahrbetrieb des Fahrzeugs, wobei bei der Ermittlung des Wertes von der Annahme eines zu dem Rad des Fahrzeugs äquivalenten starren Rades ausgegangen wird.

Typischerweise werden die Schritte 50 bis 120 während des Betriebs des Fahrzeugs kontinuierlich ausgeführt, das heißt, die Profiltiefe wird während des Fahrbetriebs kontinuierlich ermittelt. Dabei kann sowohl ein Absolutwert der Profiltiefe bestimmt werden als auch eine relative Änderung der Profiltiefe in Bezug auf einen zuvor ermittelten Wert.

Die Profiltiefe wird dabei bevorzugt für sämtliche Reifen des Fahrzeugs ermittelt, das heißt das Ermitteln der momentanen Drehgeschwindigkeit, des momentanen dynamischen Radius, des zumindest einen ersten Parameters und des momentanen dynamischen Innenradius erfolgt getrennt für jeden Reifen bzw. jedes Rad. Aus diesen Werten wird anschließend für jeden Reifen die Profiltiefe bestimmt.

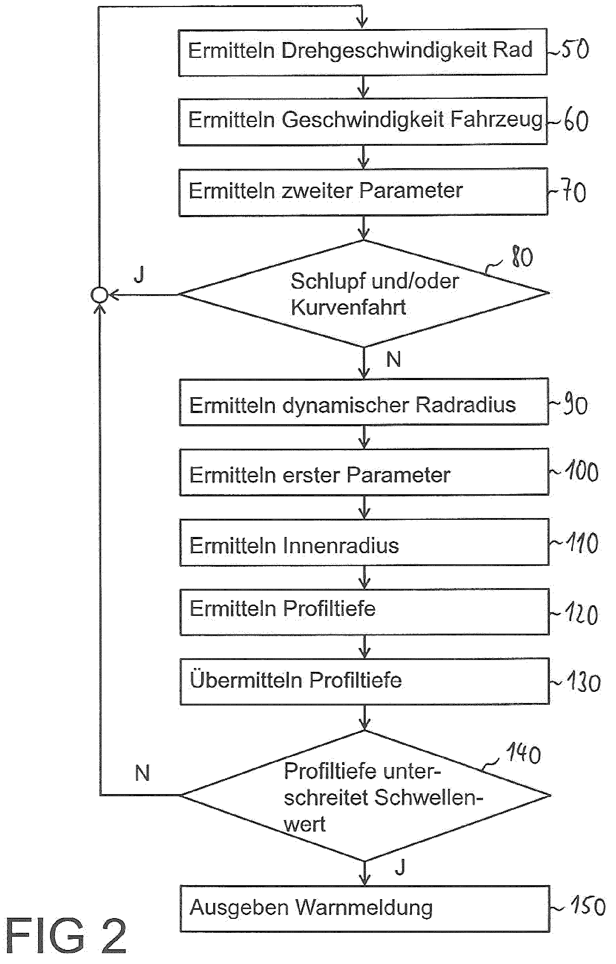

Figur 2 zeigt ein Flussdiagramm eines Verfahrens zum Ermitteln einer Profiltiefe eines Profils eines Reifens während eines Betriebs eines den Reifen aufweisenden Fahrzeugs gemäß einer zweiten Ausführungsform. Das Fahrzeug ist beispielsweise wiederum ein Personenkraftwagen oder ein Lastkraftwagen.

In einem Schritt 50 erfolgt ein Ermitteln einer momentanen Drehgeschwindigkeit eines den Reifen aufweisenden Rades des Fahrzeugs basierend auf von zumindest einem ersten Sensor ermittelter Daten, entsprechend des Schrittes 50 der in Figur 1 gezeigten ersten Ausführungsform.

Weiterhin erfolgt in einem Schritt 60 ein Ermitteln einer momentanen Geschwindigkeit des Fahrzeugs basierend auf von zumindest einem, von dem zumindest einen ersten Sensor verschiedenen zweiten Sensor ermittelten Daten, entsprechend des Schrittes 60 der in Figur 1 gezeigten ersten Ausführungsform.

In einem Schritt 70 wird zumindest ein zweiter Parameter ermittelt, ausgewählt aus der Gruppe, bestehend aus einer momentanen Beschleunigung des Fahrzeugs, einer momentanen Gierrate des Fahrzeugs, einem momentanen Lenkwinkel, einem momentanen Drehmoment eines Antriebsmotors des Fahrzeugs und einem Betriebszustand einer Bremsvorrichtung des Fahrzeugs.

Dazu wird in einem Schritt 80 basierend auf dem zumindest einen ermittelten zweiten Parameter ermittelt, ob die momentane Fahrsituation eine Fahrsituationen darstellt, in welcher kein Schlupf bzw. ein möglichst geringer Schlupf auftritt und in welcher das Fahrzeug im Wesentlichen geradlinig fährt. Beispielsweise wird ermittelt, ob der zumindest eine zweite Parameter einen vorbestimmten Schwellenwert überschreitet bzw. ob die Bremsvorrichtung des Fahrzeugs gegenwärtig aktiviert ist.

Wird dabei in dem Schritt 80 ermittelt, dass die momentane Fahrsituation keine Fahrsituationen darstellt, in welcher kein Schlupf bzw. ein möglichst geringer Schlupf auftritt und in welcher das Fahrzeug im Wesentlichen geradlinig fährt, beispielsweise falls der zweite Parameter den vorbestimmten Schwellenwert überschreitet und/oder die Bremsvorrichtung aktiviert ist, werden die Schritte 50, 60, 70 und 80 wiederholt ausgeführt.

Falls hingegen in dem Schritt 80 ermittelt wird, dass die momentane Fahrsituation eine Fahrsituationen darstellt, in welcher kein Schlupf bzw. ein möglichst geringer Schlupf auftritt und in welcher das Fahrzeug im Wesentlichen geradlinig fährt, beispielsweise falls der zweite Parameter den vorbestimmten Schwellenwert nicht überschreitet und die Bremsvorrichtung nicht aktiviert ist, wird in einem Schritt 90 ein momentaner dynamischer Radius des den Reifen aufweisenden Rades basierend auf der ermittelten momentanen Drehgeschwindigkeit und der ermittelten momentanen Geschwindigkeit entsprechend des Schrittes 90 der in Figur 1 gezeigten Ausführungsform ermittelt. Eine Situation, in welcher der Einfluss von Antriebs- bzw. Bremsschlupf gering ist, ist beispielsweise gegeben, falls eine Fahrsituation mit sehr geringer Beschleunigung erkannt wird, das heißt die longitudinale Beschleunigung sowie die laterale Beschleunigung sind nahezu Null, die Bremsvorrichtung ist nicht aktiviert, das Motormoment ist ebenfalls nahezu Null, die zeitliche Änderung der ermittelten momentanen Geschwindigkeit des Fahrzeugs ist nahezu Null und die Drehgeschwindigkeiten sämtlicher Räder des Fahrzeugs sind ungefähr gleich.

Ferner wird in einem Schritt 100 zumindest ein erster Parameter des Reifens ermittelt, ausgewählt aus der Gruppe, bestehend aus einer momentanen Reifentemperatur, einem momentanen Reifendruck und einer momentanen Reifenlast.

In einem Schritt 110 erfolgt ein Ermitteln eines momentanen dynamischen Innenradius des Rades basierend auf dem zumindest einen ermittelten Parameter sowie in einem Schritt 120 ein Ermitteln einer Profiltiefe des Profils des Reifens basierend auf dem ermittelten momentanen dynamischen Radius und dem ermittelten momentanen dynamischen Innenradius. Die Schritte 100, 110 und 120 entsprechen dabei den Schritten 100, 110 und 120 der in Figur 1 gezeigten ersten Ausführungsform.

Ferner wird die ermittelte Profiltiefe des Profils des Reifens in der gezeigten Ausführungsform in einem Schritt 130 an zumindest ein Fahrerassistenzsystem des Fahrzeugs übermittelt, beispielsweise an ein ABS oder ESP-System.

In einem Schritt 140 wird ermittelt, ob die ermittelte Profiltiefe des Profils des Reifens einen vorbestimmten Schwellenwert unterschreitet, beispielsweise 2 mm.

Falls die ermittelte Profiltiefe den vorbestimmten Schwellenwert nicht unterschreitet, werden die Schritte 50 bis 80 sowie gegebenenfalls 90 bis 140 wiederholt ausgeführt.

Falls hingegen die ermittelte Profiltiefe den vorbestimmten Schwellenwert unterschreitet, erfolgt in einem Schritt 150 ein Ausgeben einer Warnmeldung mittels einer Ausgabevorrichtung des Fahrzeugs. Ferner kann in diesem Fall automatisch eine Warnmeldung an weitere Fahrzeuge übermittelt werden und/oder automatisch eine Benachrichtigung einer Serviceeinrichtung, beispielsweise für eine Terminvereinbarung, erfolgen.

Insbesondere mittels der in den Figuren 1 und 2 gezeigten erfindungsgemäßen Verfahren kann eine Radradiusänderung als Reifendruckänderung, als Beladungsänderung oder als temperaturbedingte Änderung klassifiziert werden. Diese Effekte können somit kompensiert werden und die verbleibende Radradiusänderung als Profiltiefenänderung klassifiziert werden.

Somit kann mittels der genannten Verfahren eine individuelle Reifenprofiltiefe auf Basis eines Sensorfusions-Ansatzes ermittelt werden. Dieser Ansatz greift dabei beispielsweise auf Signale einer Reifeneinheit, des ABS-/ESP-Systems und des Navigationssystem zu. Zudem kann auf Signale der Motorsteuerung zugegriffen werden, womit die Genauigkeit der Ermittlung erhöht werden kann.

Dabei ist weiter zu beachten, dass Geschwindigkeitsdifferenzen zwischen kurveninneren und kurvenäußeren Rädern bei Kurvenfahrten typischerweise vernachlässigbar sein sollten. Derartige Einflüsse können entweder kompensiert werden, beispielsweise basierend auf einer Gierrateninformation und einer Lenkwinkelinformation, oder es können Fahrsituationen identifiziert werden, in denen kaum Kurveneffekte auftreten, beispielsweise wiederum über Lenkradwinkelinformationen und Gierrateninformationen bzw. falls die Drehgeschwindigkeiten sämtlicher Räder des Fahrzeugs ungefähr gleich sind. Bevorzugt wird dazu ein Filterprozess verwendet, welcher lediglich die oben beschriebenen Fahrsituationen mit geringem Schlupf bzw. geringen Kurveneffekten zulässt, und diese über einen gewissen Zeitraum mittelt.

Die genannten Verfahren stellen damit einen Fahrdynamikbasierten Ansatz bereit, um die Profiltiefe zu schätzen bzw. zu ermitteln. Dabei wird beispielsweise davon ausgegangen, dass die mittels eines GPS-Systems gemessene zurückgelegte Wegstrecke über eine vorgegebene Zeitperiode mit der Anzahl der von beispielsweise einem ABS-/ESP-System gemessenen Reifenumdrehungen zusammenhängt. Dieser Zusammenhang hängt insbesondere von dem dynamischen Radradius ab, der wiederum von der Profiltiefe abhängt.

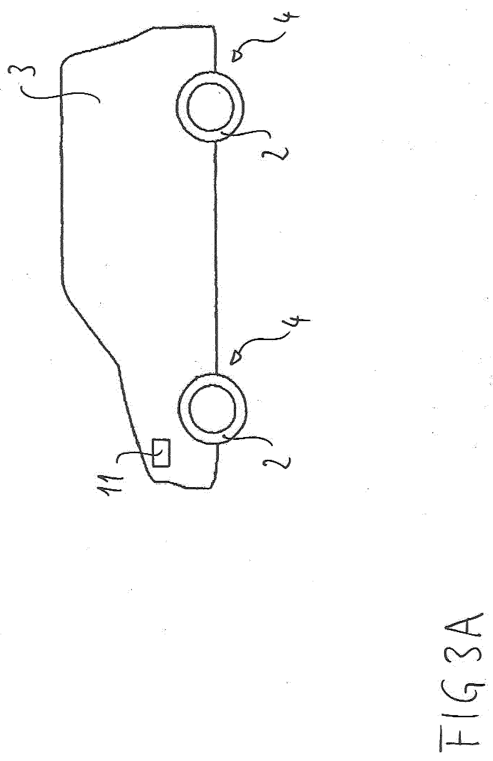

Figur 3A zeigt eine schematische Darstellung eines Fahrzeugs 3 mit einem Steuergerät 11 zum Ermitteln einer Profiltiefe eines Profils eines Reifens 2 zumindest eines Rades 4 des Fahrzeugs 3.

Das Fahrzeug 3 ist in der gezeigten Darstellung ein Kraftfahrzeug in Form eines Personenkraftwagens und weist insgesamt vier Räder auf, von denen in Figur 3A ein Vorderrad sowie ein Hinterrad gezeigt sind. Weitere Einzelheiten werden im Zusammenhang mit den folgenden Figuren näher erläutert.

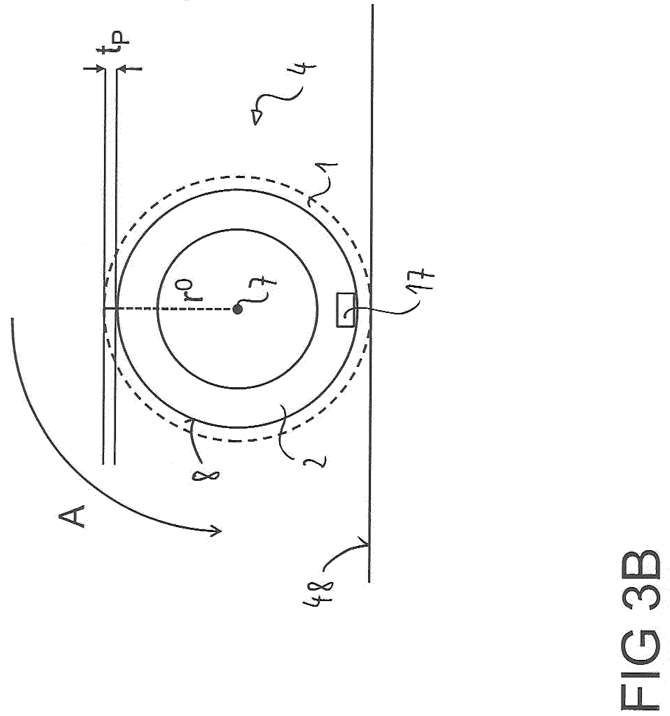

Dazu zeigt Figur 3B einen schematischen Querschnitt eines der Räder 4 des in Figur 3A gezeigten Fahrzeugs.

Wie in Figur 3B gezeigt ist, weist der Reifen 2 des Rades 4 ein schematisch mittels einer unterbrochenen Linie dargestelltes Profil 1 mit einer Profiltiefe t_{P} auf. Das Rad 4 besitzt einen Innenradius r⁰, wobei der Innenradius r⁰ des Rades 4 der Abstand zwischen einer Radmitte 7 und einem reifenseitigen Ansatz 8 des Profils 1 ist. Der Innenradius r⁰ des Rades 4 gibt somit den Radius des Rades 4 ohne das Profil 1 des Reifens 2 an. Weiterhin ist in Figur 3B eine Abrollrichtung des Rades 4 schematisch mittels eines Pfeils A dargestellt.

Ferner ist in Figur 3B eine Radeinheit 17 gezeigt, die in dem Reifen 2 angeordnet ist. Ist eine derartige Reifeneinheit bzw. Radeinheit 17 direkt im Latsch, das heißt in der Kontaktfläche zwischen Fahrbahn 48 und Reifen 2, bzw. auf der Innenseite der Lauffläche verbaut, kann diese zudem die Wechselwirkung zwischen Fahrbahn 48 und Reifen 2 direkt erfassen, beispielsweise über einen Beschleunigungssensor, einen Schocksensor oder ein Piezo-Element. Über ein Latschlängenmessung in Verbindung mit der Reifendruckmessung sowie einer eventuellen Reifentemperatur- und Geschwindigkeitsmessung kann in diesem Fall die individuelle Reifenlast bestimmt werden, das heißt, die Reifenlast ist eine Funktion der Latschlänge, des Reifendrucks, der Temperatur und der Geschwindigkeit.

Wie im Folgenden näher erläutert wird, kann mittels in Figur 3B nicht näher dargestellten Sensoren der Radeinheit 17 sowie basierend auf weiteren ermittelten Parametern eine momentane Profiltiefe des Profils 1 des Reifens 2 während eines Betriebs des Fahrzeugs bestimmt werden. Bei der Ermittlung des Wertes der momentanen Profiltiefe wird dabei, wie bereits erläutert, von der Annahme eines zu dem Rad des Fahrzeugs äquivalenten starren Rades ausgegangen.

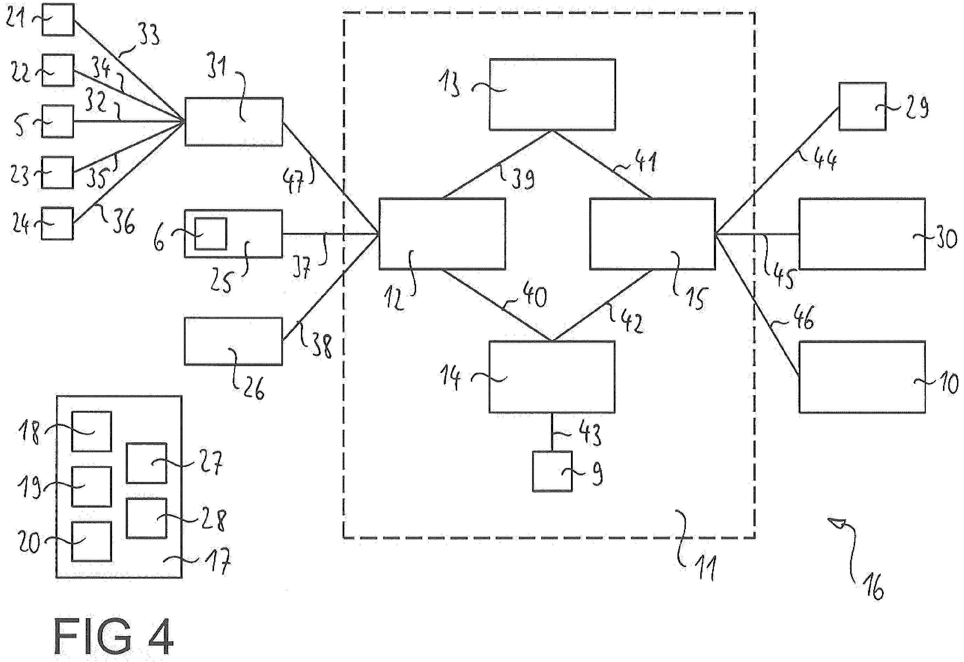

Dazu zeigt Figur 4 ein System 16 zum Ermitteln einer Profiltiefe eines Profils eines Reifens des in Figur 4 nicht näher dargestellten Fahrzeugs. Komponenten mit den gleichen Funktionen wie in den Figuren 3A und 3B werden mit den gleichen Bezugszeichen gekennzeichnet und im Folgenden nicht nochmals erläutert.

Das System 16 weist ein Steuergerät 11 sowie für jedes Rad bzw. jeden Reifen des Fahrzeugs eine Radeinheit 17 auf, wobei in Figur 4 aus Gründen der Übersichtlichkeit lediglich eine derartige Radeinheit 17 dargestellt ist.

Die Radeinheit 17 ist in dem jeweiligen Reifen anordenbar und weist in der gezeigten Ausführungsform jeweils einen Temperatursensor 18 zum Ermitteln einer momentanen Reifentemperatur, einen Drucksensor 19 zum Ermitteln eines momentanen Reifendrucks und einen Reifenlastsensor 20 zum Ermitteln einer momentanen Reifenlast auf. Ferner weist die Radeinheit 17 eine Speichervorrichtung 27 auf, wobei in der Speichervorrichtung 27 beispielsweise Daten bezüglich eine Art des Reifens und/oder eines Alters des Reifens abgelegt werden können. Insbesondere können charakteristische Reifeneigenschaften, wie beispielsweise Reifentyp, Alter, Dimension, DOT-Nummer und Treadwear-Rating, hinterlegt und zur Verfügung gestellt werden. Darüber hinaus weist die Radeinheit 17 eine Sendevorrichtung 28 auf, mittels derer die genannten Daten an das Steuergerät 11 übermittelt werden können.

Das Steuergerät 11 weist dazu eine Empfangsvorrichtung 12 auf, die zum Empfangen eines momentanen Reifentemperatur-Wertes, eines momentanen Reifendruck-Wertes und eines momentanen Reifenlast-Wertes von der Sendevorrichtung 28 ausgebildet ist.

Ferner ist die Empfangsvorrichtung 12 zum Empfangen eines momentanen Drehgeschwindigkeits-Wertes des den Reifen aufweisenden Rades des Fahrzeugs ausgebildet. Dazu ist die Empfangsvorrichtung 12 über eine Signalleitung 47 mit einem Steuergerät 31 verbunden, das in der gezeigten Ausführungsform als ABS- oder ESP-Steuergerät ausgebildet ist. Das Steuergerät 31 ist ferner über eine Signalleitung 32 mit einem ersten Sensor 5 in Form eines Drehwinkelsensors verbunden. Dabei ist jedem Rad des Fahrzeugs ein eigener erster Sensor 5 zugeordnet, wobei aus Gründen der Übersichtlichkeit in Figur 4 lediglich ein derartiger erster Sensor 5 dargestellt ist.

Zudem ist das Steuergerät 31 über eine Signalleitung 33 mit einem Beschleunigungssensor 21 verbunden, der zum Ermitteln einer longitudinalen Beschleunigung des Fahrzeugs und einer lateralen Beschleunigung des Fahrzeugs ausgebildet ist. Weiterhin ist das Steuergerät 31 über eine Signalleitung 34 mit einem Gierratensensor 22 und über eine Signalleitung 35 mit einem Lenkwinkelsensor 23 verbunden. Darüber hinaus ist das Steuergerät 31 über eine Signalleitung 36 mit einem Sensor 24 verbunden, der zum Ermitteln eines Betriebszustands einer nicht näher dargestellten Bremsvorrichtung des Fahrzeugs ausgebildet ist. Beispielsweise kann der Sensor 24 ein Bremslicht-Signal der Bremsvorrichtung an das Steuergerät 31 übermitteln. Die von den genannten Sensoren ermittelten Daten werden in dem Steuergerät 31 verarbeitet und die daraus bestimmten Werte an die Empfangsvorrichtung 12 übermittelt.

Die Empfangsvorrichtung 12 ist weiterhin über eine Signalleitung 37 mit einem Navigationssystem 25 verbunden, das einen zweiten Sensor 6 in Form eines Positionsermittlungssensors aufweist. Basierend auf von dem zweiten Sensor 6 ermittelter Daten kann von dem Navigationssystem 25 eine momentane Geschwindigkeit des Fahrzeugs ermittelt und mittels der Empfangsvorrichtung 12 dem Steuergerät 11 bereitgestellt werden.

Ferner ist die Empfangsvorrichtung 12 über eine Signalleitung 38 mit einem Motorsteuergerät 26 eines nicht näher dargestellten Antriebsmotors des Fahrzeugs verbunden. Dadurch kann ein momentanes Drehmoment des Antriebsmotors an das Steuergerät 11 übermittelt werden.

Das Steuergerät 11 weist zudem eine erste Ermittlungsvorrichtung 13 auf, die zum Ermitteln eines momentanen dynamischen Radius des den Reifen aufweisenden Rades basierend auf dem von der Empfangsvorrichtung 12 empfangenen momentanen Drehgeschwindigkeits-Wert und dem empfangenen momentanen Geschwindigkeits-Wert ausgebildet ist. Dazu ist die erste Ermittlungsvorrichtung 13 über eine Signalleitung 39 mit der Empfangsvorrichtung 12 verbunden.

Weiterhin weist das Steuergerät 11 eine zweite Ermittlungsvorrichtung 14 auf, die zum Ermitteln eines momentanen dynamischen Innenradius des Rades basierend auf dem empfangenen momentanen Reifentemperatur-Wert, dem empfangenen momentanen Reifendruck-Wert, dem empfangenen momentanen Reifenlast-Wert sowie der Art des Reifens und/oder des Alters des Reifens ausgebildet ist. Das Alter des Reifens kann beispielsweise basierend auf dem in der Speichervorrichtung 27 abgelegten Herstellungsdatum ermittelt werden, womit insbesondere erkannt werden kann, ob ein neuwertiger Reifen vorliegt, auf welchen sich das System 16 dann einlernen kann.

Die zweite Ermittlungsvorrichtung 14 ist dabei über eine Signalleitung 40 mit der Empfangsvorrichtung 12 verbunden und in der gezeigten Ausführungsform zum Ermitteln des momentanen dynamischen Innenradius des Rades mittels einer Mehrzahl von in einer Speichervorrichtung 9 abgelegten Kennlinien ausgebildet. Die Speichervorrichtung 9 ist dazu über eine Signalleitung 43 mit der zweiten Ermittlungsvorrichtung 14 verbunden.

Das Steuergerät 11 weist ferner eine dritte Ermittlungsvorrichtung 15 auf, die zum Ermitteln einer Profiltiefe des Profils des Reifens basierend auf dem ermittelten momentanen dynamischen Radius und dem ermittelten momentanen dynamischen Innenradius ausgebildet ist. Dazu ist die dritte Ermittlungsvorrichtung 15 über eine Signalleitung 41 mit der ersten Ermittlungsvorrichtung 13 sowie über eine Signalleitung 42 mit der zweiten Ermittlungsvorrichtung 14 verbunden.

Die dritte Ermittlungsvorrichtung 15 ist in der gezeigten Ausführungsform ausgebildet zum Ermitteln, ob die jeweilige momentane Fahrsituation eine Fahrsituationen darstellt, in welcher kein Schlupf bzw. ein möglichst geringer Schlupf auftritt und in welcher das Fahrzeug im Wesentlichen geradlinig fährt, basierend auf den von der Empfangsvorrichtung 12 empfangenen Werten der momentanen Beschleunigung des Fahrzeugs, der momentanen Gierrate des Fahrzeugs, dem momentanen Lenkwinkel, dem momentanen Drehmoment des Antriebsmotors und dem Betriebszustand der Bremsvorrichtung.

Falls die dritte Ermittlungsvorrichtung 15 dabei ermittelt, dass die momentane Fahrsituation keine Fahrsituationen darstellt, in welcher kein Schlupf bzw. ein möglichst geringer Schlupf auftritt und in welcher das Fahrzeug im Wesentlichen geradlinig fährt, kann diese Information an die erste Ermittlungsvorrichtung 13 und/oder die zweite Ermittlungsvorrichtung 14 übermittelt werden und das Ermitteln des momentanen dynamischen Radius bzw. des momentanen dynamischen Innenradius in diesen Situationen unterbleiben. Dazu sind insbesondere die Signalleitungen 41 und 42 als bidirektionale Signalleitungen ausgebildet. Ferner können in derartigen Situationen bereits ermittelte Werte bei der Bestimmung der Profiltiefe unberücksichtigt bleiben.

Zudem ist die dritte Ermittlungsvorrichtung 15 in der gezeigten Ausführungsform ausgebildet zum Ermitteln, ob die ermittelte Profiltiefe des Profils des Reifens einen vorbestimmten Schwellenwert unterschreitet. Ist dies der Fall, kann eine Warnmeldung mittels einer Ausgabevorrichtung 30 des Fahrzeugs ausgegeben sowie mittels einer Sendevorrichtung 29 an weitere Fahrzeuge übermittelt werden. Die dritte Ermittlungsvorrichtung 15 ist dazu über eine Signalleitung 45 mit der Ausgabevorrichtung 30 sowie über eine Signalleitung 44 mit der Sendevorrichtung 29 verbunden.

Ferner kann die ermittelte Profiltiefe des Profils des Reifens an ein Fahrerassistenzsystem 10 des Fahrzeugs übermittelt werden. Dazu ist die dritte Ermittlungsvorrichtung 15 über eine Signalleitung 46 mit dem Fahrerassistenzsystem 10 verbunden, welches beispielsweise als Bremsassistent oder Notbremssystem ausgebildet ist.

Die Profiltiefe eines Reifens hat dabei maßgeblichen Einfluss auf das Verhalten des Fahrzeugs. Dies gilt insbesondere in kritischen Fahrsituationen. Einerseits ist der maximale Kraftschluss zwischen Reifen und Fahrbahn, das heißt der Grip, stark von den jeweiligen Fahrbahnbeschaffenheiten, beispielsweise dem Fahrbahnbelag oder dem Vorhandensein von Schnee oder Eis auf der Fahrbahn, abhängig. Andererseits kann der Kraftschluss für die jeweiligen Verhältnisse durch bestimmte Reifeneigenschaften optimiert werden. Hierzu gehört insbesondere ein für die jeweiligen Witterungsverhältnisse optimiertes Reifenprofil. Die Effektivität des Reifenprofils ist dabei maßgeblich durch die Profiltiefe bestimmt. Beispielsweise kann bei Aquaplaning das Wasser zwischen Fahrbahn und Reifen aufgrund eines nicht mehr ausreichenden Profils nicht mehr verdrängt werden.

Somit kann durch eine ausreichende Profiltiefe der bestmögliche Kraftschluss zwischen Reifen und Fahrbahn insbesondere in kritischen Fahrsituationen gewährleistet werden. Daher existieren typischerweise gesetzliche Anforderungen für eine Mindestprofiltiefe, die dabei auch saisonbedingt variieren kann.

Mittels der vorliegenden Erfindung wird in vorteilhafter Weise ein Verfahren sowie ein Steuergerät und ein System zur Verfügung gestellt, mit welchen die Profiltiefe während der Fahrt geschätzt bzw. ermittelt werden kann. Diese Information kann insbesondere dem Fahrer zur Verfügung gestellt werden, damit dieser rechtzeitig Reifen mit zu geringer Profiltiefe auswechselt. Dadurch können spezifische Gefahrensituationen, insbesondere Aquaplaning und ein Verlust von Grip auf schneebedeckten Fahrbahnen, und damit einhergehende Unfälle vermieden werden.

Weiterhin kann die ermittelte Profiltiefe anderen Fahrzeugsystemen, insbesondere aktiven Sicherheitssystemen, beispielsweise einem ABS oder ESP, zur Verfügung gestellt werden. Dadurch können die betreffenden Regelstrategien der verringerten Gripsituation angepasst und somit optimiert werden.

Darüber hinaus lässt der mittelfristige zeitliche Verlauf der Profiltiefe Rückschlüsse für den saisonbedingten Reifenwechsel zu. Dadurch kann abgeschätzt werden, ob der betreffende Reifen noch ausreichend Profil für die kommende Saison besitzt oder ausgetauscht werden sollte.

### Bezugszeichenliste

- 1: Profil
- 2: Reifen
- 3: Fahrzeug
- 4: Rad
- 5: Sensor
- 6: Sensor
- 7: Radmitte
- 8: Ansatz
- 9: Speichervorrichtung
- 10: Fahrerassistenzsystem
- 11: Steuergerät
- 12: Empfangsvorrichtung
- 13: Ermittlungsvorrichtung
- 14: Ermittlungsvorrichtung
- 15: Ermittlungsvorrichtung
- 16: System
- 17: Radeinheit
- 18: Temperatursensor
- 19: Drucksensor
- 20: Reifenlastsensor
- 21: Beschleunigungssensor
- 22: Gierratensensor
- 23: Lenkwinkelsensor
- 24: Sensor
- 25: Navigationssystem
- 26: Motorsteuergerät
- 27: Speichervorrichtung
- 28: Sendevorrichtung
- 29: Sendevorrichtung
- 30: Ausgabevorrichtung
- 31: Steuergerät
- 32: Signalleitung
- 33: Signalleitung
- 34: Signalleitung
- 35: Signalleitung
- 36: Signalleitung
- 37: Signalleitung
- 38: Signalleitung
- 39: Signalleitung
- 40: Signalleitung
- 41: Signalleitung
- 42: Signalleitung
- 43: Signalleitung
- 44: Signalleitung
- 45: Signalleitung
- 46: Signalleitung
- 47: Signalleitung
- 48: Fahrbahn
- 50: Schritt
- 60: Schritt
- 70: Schritt
- 80: Schritt
- 90: Schritt
- 100: Schritt
- 110: Schritt
- 120: Schritt
- 130: Schritt
- 140: Schritt
- 150: Schritt

- A: Pfeil

## Patentansprüche

1. Verfahren zum Ermitteln einer Profiltiefe eines Profils (1) eines Reifens (2) während eines Betriebs eines den Reifen (2) aufweisenden Fahrzeugs (3), wobei das Verfahren folgende Schritte aufweist:
- Ermitteln einer momentanen Drehgeschwindigkeit eines den Reifen (2) aufweisenden Rades (4) des Fahrzeugs (3) basierend auf von zumindest einem ersten Sensor (5) ermittelten Daten,
- Ermitteln einer momentanen Geschwindigkeit des Fahrzeugs (3) basierend auf von zumindest einem, von dem zumindest einen ersten Sensor (5) verschiedenen zweiten Sensor (6) ermittelten Daten,
- Ermitteln eines momentanen dynamischen Radius des den Reifen (2) aufweisenden Rades (4) basierend auf der ermittelten momentanen Drehgeschwindigkeit und der ermittelten momentanen Geschwindigkeit,
**gekennzeichnet durch** die Schritte:
- Ermitteln zumindest eines ersten Parameters des Reifens (2), ausgewählt aus der Gruppe, bestehend aus einer momentanen Reifentemperatur, einem momentanen Reifendruck und einer momentanen Reifenlast,
- Ermitteln eines momentanen dynamischen Innenradius des Rades (4) basierend auf dem zumindest einen ermittelten ersten Parameter, wobei der Innenradius des Rades (4) der Abstand zwischen der Radmitte (7) und dem reifenseitigen Ansatz (8) des Profils (1) ist,
- Ermitteln einer Profiltiefe des Profils (1) des Reifens (2) basierend auf dem ermittelten momentanen dynamischen Radius und dem ermittelten momentanen dynamischen Innenradius.

2. Verfahren nach Anspruch 1, wobei der zumindest eine erste Sensor (5) als Drehzahlsensor ausgebildet ist.

3. Verfahren nach Anspruch 1 oder Anspruch 2, wobei der zumindest eine zweite Sensor (6) ausgewählt ist aus der Gruppe, bestehend aus einem satellitengestützten Positionsermittlungssensor, einem Radarsensor, einem Lidarsensor, einem Ultraschallsensor und einer optischen Kamera.

4. Verfahren nach einem der vorhergehenden Ansprüche, wobei das Ermitteln des momentanen dynamischen Innenradius des Rades (4) zudem basierend auf der ermittelten momentanen Geschwindigkeit erfolgt.

5. Verfahren nach einem der vorhergehenden Ansprüche, wobei das Ermitteln des momentanen dynamischen Innenradius des Rades (4) zudem basierend auf einer Reifenart und/oder einem Alter des Reifens (2) erfolgt.

6. Verfahren nach einem der vorhergehenden Ansprüche, wobei das Ermitteln des momentanen dynamischen Innenradius des Rades (4) mittels zumindest einer, in einer Speichervorrichtung (9) abgelegten Kennlinie erfolgt.

7. Verfahren nach einem der vorhergehenden Ansprüche, wobei zudem zumindest ein zweiter Parameter ermittelt wird, ausgewählt aus der Gruppe, bestehend aus einer momentanen Beschleunigung des Fahrzeugs (3), einer momentanen Gierrate des Fahrzeugs (3), einem momentanen Lenkwinkel, einem momentanen Drehmoment eines Antriebsmotors des Fahrzeugs (3) und einem Betriebszustand einer Bremsvorrichtung des Fahrzeugs (3), und wobei das Ermitteln der Profiltiefe des Profils des Reifens (2) zudem in Abhängigkeit des zumindest einen ermittelten zweiten Parameters erfolgt.

8. Verfahren nach einem der vorhergehenden Ansprüche, wobei zudem ein Ausgeben einer Warnmeldung erfolgt, falls die ermittelte Profiltiefe des Profils des Reifens (2) einen ersten vorbestimmten Schwellenwert unterschreitet.

9. Verfahren nach einem der vorhergehenden Ansprüche, wobei zudem eine Benachrichtigung einer Serviceeinrichtung erfolgt, falls die ermittelte Profiltiefe des Profils des Reifens (2) einen zweiten vorbestimmten Schwellenwert unterschreitet.

10. Verfahren nach einem der vorhergehenden Ansprüche, wobei die ermittelte Profiltiefe des Profils des Reifens (2) an zumindest ein Fahrerassistenzsystem (10) des Fahrzeugs (3) übermittelt wird.

11. Steuergerät für ein Fahrzeug (3) zum Ermitteln einer Profiltiefe eines Profils (1) eines Reifens (2) des Fahrzeugs (3), aufweisend
- zumindest eine Empfangsvorrichtung (12) ausgebildet zum Empfangen einer momentanen Drehgeschwindigkeit eines den Reifen (2) aufweisenden Rades (4) des Fahrzeugs (3), einer momentanen Geschwindigkeit des Fahrzeugs (3) und zumindest eines ersten Parameters des Reifens (2), ausgewählt aus der Gruppe, bestehend aus einer momentanen Reifentemperatur, einem momentanen Reifendruck und einer momentanen Reifenlast,
- eine erste Ermittlungsvorrichtung (13) ausgebildet zum Ermitteln eines momentanen dynamischen Radius des den Reifen (2) aufweisenden Rades (4) basierend auf der empfangenen momentanen Drehgeschwindigkeit und der empfangenen momentanen Geschwindigkeit,
**dadurch gekennzeichnet, dass** das Steuergerät
- eine zweite Ermittlungsvorrichtung (14) ausgebildet zum Ermitteln eines momentanen dynamischen Innenradius des Rades (4) basierend auf dem zumindest einen empfangenen ersten Parameter, wobei der Innenradius des Rades (4) der Abstand zwischen der Radmitte (7) und dem reifenseitigen Ansatz (8) des Profils (1) ist, und
- eine dritte Ermittlungsvorrichtung (15) ausgebildet zum Ermitteln einer Profiltiefe des Profils (1) des Reifens (2) basierend auf dem ermittelten momentanen dynamischen Radius und dem ermittelten momentanen dynamischen Innenradius aufweist.

12. System für ein Fahrzeug (3) zum Ermitteln einer Profiltiefe eines Profils (1) eines Reifens (2) des Fahrzeugs (3), aufweisend ein Steuergerät (11) nach Anspruch 11 und zumindest eine Radeinheit (17), wobei die zumindest eine Radeinheit (17) in dem Reifen (2) anordenbar ist und zumindest einen Sensor aufweist, ausgewählt aus der Gruppe, bestehend aus einem Temperatursensor (18), einem Drucksensor (19) und einem Reifenlastsensor (20).

## Claims

1. Method for determining a profile depth of a profile (1) of a tire (2) during operation of a vehicle (3) having the tire (2), wherein the method comprises the following steps:
- determining an instantaneous rotational speed of a wheel (4) of the vehicle (3) having the tire (2), on the basis of data determined by at least one first sensor (5),
- determining an instantaneous speed of the vehicle (3) on the basis of data determined by at least one second sensor (6), which is different from the at least one first sensor (5),
- determining an instantaneous dynamic radius of the wheel (4) having the tire (2), on the basis of the determined instantaneous rotational speed and the determined instantaneous speed,
**characterized by** the steps of:
- determining at least one first parameter of the tire (2), selected from the group composed of an instantaneous tire temperature, an instantaneous tire pressure and an instantaneous tire load,
- determining an instantaneous dynamic internal radius of the wheel (4) on the basis of the at least one determined first parameter, wherein the internal radius of the wheel (4) is the distance between the wheel center (7) and the tire-side start (8) of the profile (1), and
- determining a profile depth of the profile (1) of the tire (2) on the basis of the determined instantaneous dynamic radius and the determined instantaneous dynamic internal radius.

2. Method according to Claim 1, wherein the at least one first sensor (5) is embodied as a rotational speed sensor.

3. Method according to Claim 1 or Claim 2, wherein the at least one second sensor (6) is selected from the group composed of a satellite-assisted position-determining sensor, a radar sensor, a lidar sensor, an ultrasonic sensor and an optical camera.

4. Method according to one of the preceding claims, wherein the instantaneous dynamic internal radius of the wheel (4) is additionally determined on the basis of the determined instantaneous speed.

5. Method according to one of the preceding claims, wherein the instantaneous dynamic internal radius of the wheel (4) is additionally determined on the basis of a type of tire and/or the age of the tire (2).

6. Method according to one of the preceding claims, wherein the instantaneous dynamic internal radius of the wheel (4) is determined by means of at least one characteristic curve which is stored in a memory device (9).

7. Method according to one of the preceding claims, wherein at least one second parameter is additionally determined, selected from the group composed of an instantaneous acceleration of the vehicle (3), an instantaneous yaw rate of the vehicle (3), an instantaneous steering angle, an instantaneous torque of a drive engine of the vehicle (3) and an operating state of a brake device of the vehicle (3), and wherein the profile depth of the profile of the tire (2) is additionally determined as a function of the at least one determined second parameter.

8. Method according to one of the preceding claims, wherein a warning message is additionally issued if the determined profile depth of the profile of the tire (2) undershoots a first predetermined threshold value.

9. Method according to one of the preceding claims, wherein a service device is additionally informed if the determined profile depth of the profile of the tire (2) undershoots a second predetermined threshold value.

10. Method according to one of the preceding claims, wherein the determined profile depth of the profile of the tire (2) is transmitted to at least one driver assistance system (10) of the vehicle (3).

11. Control device for a vehicle (3) for determining a profile depth of a profile (1) of a tire (2) of the vehicle (3), having
- at least one receiver device (12) designed to receive an instantaneous rotational speed of a wheel (4) of the vehicle (3) having the tire (2), an instantaneous speed of the vehicle (3) and at least one first parameter of the tire (2) selected from the group composed of an instantaneous tire temperature, an instantaneous tire pressure and an instantaneous tire load,
- a first determining device (13) designed to determine an instantaneous dynamic radius of the wheel (4) having the tire (2), on the basis of the received instantaneous rotational speed and the received instantaneous speed,
**characterized in that** the control device has
- a second determining device (14) designed to determine an instantaneous dynamic internal radius of the wheel (4) on the basis of the at least one received first parameter, wherein the internal radius of the wheel (4) is the distance between the wheel center (7) and the tire-side start (8) of the profile (1), and
- a third determining device (15) designed to determine a profile depth of the profile (1) of the tire (2) on the basis of the determined instantaneous dynamic radius and the determined instantaneous dynamic internal radius.

12. System for a vehicle (3) for determining a profile depth of a profile (1) of a tire (2) of the vehicle (3), having a control device (11) according to Claim 11 and at least one wheel unit (17), wherein the at least one wheel unit (17) can be arranged in the tire (2) and has at least one sensor selected from the group composed of a temperature sensor (18), a pressure sensor (19) and a tire load sensor (20).

## Revendications

1. Procédé de détermination d'une profondeur de profilé d'un profilé (1) d'un pneu (2) pendant un fonctionnement d'un véhicule (3) équipé du pneu (2), le procédé comprenant les étapes suivantes :
- détermination d'une vitesse de rotation momentanée d'une roue (4) du véhicule (3) équipée du pneu (2) en se basant sur les données déterminées par au moins un premier capteur (5),
- détermination d'une vitesse momentanée du véhicule (3) en se basant sur les données déterminées par au moins un deuxième capteur (6), différent du premier capteur (5),
- détermination d'un rayon dynamique momentané de la roue (4) équipée du pneu (2) en se basant sur la vitesse de rotation momentanée déterminée et sur la vitesse momentanée déterminée,
**caractérisé par** les étapes suivantes :
- détermination d'au moins un premier paramètre du pneu (2), sélectionné dans le groupe composé d'une température de pneu momentanée, d'une pression de pneu momentanée et d'une charge de pneu momentanée,
- détermination d'un rayon intérieur dynamique momentané de la roue (4) en se basant sur l'au moins un premier paramètre déterminé, le rayon intérieur de la roue (4) étant l'écart entre le centre de la roue (7) et l'épaulement (8) côté pneu du profilé (1),
- détermination d'une profondeur de profilé du profilé (1) du pneu (2) en se basant sur le rayon dynamique déterminé et le rayon intérieur dynamique momentané déterminé.

2. Procédé selon la revendication 1, selon lequel l'au moins un premier capteur (5) est réalisé sous la forme d'un capteur de vitesse de rotation.

3. Procédé selon la revendication 1 ou la revendication 2, selon lequel l'au moins un deuxième capteur (6) est sélectionné dans le groupe composé d'un capteur de détermination de position avec assistance satellitaire, un capteur radar, un capteur lidar, un capteur à ultrasons et une caméra optique.

4. Procédé selon l'une des revendications précédentes, selon lequel la détermination du rayon intérieur dynamique momentané de la roue (4) est en plus effectuée en se basant sur la vitesse momentanée déterminée.

5. Procédé selon l'une des revendications précédentes, selon lequel la détermination du rayon intérieur dynamique momentané de la roue (4) est en plus effectuée en se basant sur un type de pneu et/ou un âge du pneu (2).

6. Procédé selon l'une des revendications précédentes, selon lequel la détermination du rayon intérieur dynamique momentané de la roue (4) est en plus effectuée au moyen d'au moins une courbe caractéristique stockée dans un dispositif de mémorisation (9).

7. Procédé selon l'une des revendications précédentes, selon lequel au moins un deuxième paramètre est en plus déterminé, sélectionné dans le groupe composé d'une accélération momentanée du véhicule (3), d'un taux de lacet momentané du véhicule (3), d'un angle de braquage momentané, d'un couple momentané du moteur de propulsion du véhicule (3) et d'un état de fonctionnement d'un système de freinage du véhicule (3), et la détermination de la profondeur de profilé du pneu (2) est en plus effectuée en fonction de l'au moins un deuxième paramètre déterminé.

8. Procédé selon l'une des revendications précédentes, selon lequel la délivrance d'un message d'alerte a en plus lieu dans le cas où la profondeur de profilé déterminée du profilé du pneu (2) devient inférieure à une première valeur de seuil prédéfinie.

9. Procédé selon l'une des revendications précédentes, selon lequel une notification d'un dispositif d'entretien est en plus effectuée dans le cas où la profondeur de profilé déterminée du profilé du pneu (2) devient inférieure à une deuxième valeur de seuil prédéfinie.

10. Procédé selon l'une des revendications précédentes, selon lequel la profondeur de profilé déterminée du profilé du pneu (2) est communiquée à au moins un système d'assistance au conducteur (10) du véhicule (3).

11. Contrôleur pour un véhicule (3) destiné à déterminer une profondeur de profilé d'un profilé (1) d'un pneu (2) du véhicule (3), comprenant :
- au moins un dispositif de réception (12) configuré pour recevoir une vitesse de rotation momentanée d'une roue (4) du véhicule (3) équipée du pneu (2), une vitesse momentanée du véhicule (3) et au moins un premier paramètre du pneu (2), sélectionné dans le groupe composé d'une température de pneu momentanée, d'une pression de pneu momentanée et d'une charge de pneu momentanée,
- un premier dispositif de détermination (13) configuré pour déterminer un rayon dynamique momentané de la roue (4) équipée du pneu (2) en se basant sur la vitesse de rotation momentanée reçue et sur la vitesse momentanée reçue,
**caractérisé en ce que** le contrôleur possède
- un deuxième dispositif de détermination (14) configuré pour déterminer un rayon intérieur dynamique momentané de la roue (4) en se basant sur l'au moins un premier paramètre reçu, le rayon intérieur de la roue (4) étant l'écart entre le centre de la roue (7) et l'épaulement (8) côté pneu du profilé (1), et
- un troisième dispositif de détermination (15) configuré pour déterminer une profondeur de profilé du profilé (1) du pneu (2) en se basant sur le rayon dynamique déterminé et le rayon intérieur dynamique momentané déterminé.

12. Système pour un véhicule (3) de détermination d'une profondeur de profilé d'un profilé (1) d'un pneu (2) du véhicule (3), comprenant un contrôleur (11) selon la revendication 11 et au moins une unité de roue (17), l'au moins une unité de roue (17) pouvant être disposée dans le pneu (2) et possédant au moins un capteur, sélectionné dans le groupe composé d'un capteur de température (18), d'un capteur de pression (19) et d'un capteur de charge de pneu (20).
